# EUROPÄISCHE PATENTSCHRIFT

(11) **EP 1 452 827 B1**
(45) Veröffentlichungstag und Bekanntmachung des Hinweises auf die Patenterteilung: **30.03.2011**
(21) Anmeldenummer: 04001547.1
(22) Anmeldetag: 26.01.2004
(51) Int. Cl.: G01B 7/02, G01B 7/14, G01D 5/14, G01R 33/02

(54) **Vorrichtung mit einem in einem Rohr bewegbaren Molch und einem Positionsdetektor für den Molch**
Apparatus comprising a pig movable in a tube and a position detector for said pig
Dispositif comprenant une navette mobile dans un tube et un capteur de position pour ladite navette

(30) Priorität: 28.02.2003 DE 10309142
(43) Veröffentlichungstag der Anmeldung: 01.09.2004
(73) Patentinhaber: Eisenmann AG, 71032 Böblingen (DE)
(72) Erfinder: Ucan, Aydin, 71634 Ludwigsburg (DE)
(74) Vertreter: Ostertag, Ulrich

(56) Entgegenhaltungen:
- EP-A- 1 158 275
- DE-A1- 3 920 981
- DE-A1- 4 341 810
- US-A- 5 035 021
- US-A- 5 451 870
- US-A- 6 014 789

## Beschreibung

eine Vorrichtung mit einem in einem Rohn beweg baren Molch und einem.

Die Erfindung betrifft Positionsdetektor für den Molch nach dem Oberbegriff des Anspruches 1.

Positionsdetektoren werden dazu verwendet, die Stellung von Molchen in Förderleitungen zu messen. In vielen Fällen ist der Molch mit einem innenliegenden Magneten ausgestattet, dessen geometrische und magnetische Achse mit der Rohrachse zusammenfällt. Außen an dem Rohr, durch welches der Molch bewegt wird, ist ein Magnetfeldsensor angeordnet. Es kann sich hierbei um einen magnetischen oder induktiven Sensor handeln.

Es wurde nun erkannt, daß derartige Positionsdetektoren aus mehreren Gründen ungünstig sind: Zum einen ist das Magnetfeld, das am Ort des Magnetfeldsensors aufgebaut wird, verglichen mit dem bei den Enden des Permanentmagneten herrschenden Feld klein. Darüber hinaus erhält man zwei Stellungen, bei denen der Magnetfeldsensor anspricht, nämlich dann, wenn jeweils eine der beiden Stirnflächen des Permanentmagneten dem Magnetfeldsensor gegenübersteht. Für eine eindeutige Positionserkennung muß somit das aktuelle Ausgangssignal des Magnetfeldsensors zusammen mit in der Vergangenheit erhaltenen Ausgangssignalen des Magnetfeldsensors ausgewertet werden. Darüber hinaus ist bei exakter Gegenüberstellung von Molch und Magnetfeldsensor keine scharfe Änderung des Magnetfeldsensor-Ausgangssignales mit kleinen Bewegungen des bewegten Molches verbunden.

Auch müssen Permanentmagnet und Magnetfeldsensor nahe beieinander angeordnet sein. Bei großem Abstand zwischen Magnet und Sensor bräuchte man sehr empfindliche Magnetfeldsensoren, z.B. Spulen mit großemDurchmesser, die für manche Anwendungen zu viel Platz einnehmen.

Ein Molch mit einem Positionsdetektor ist aus der DE 39 20 981 A1 bekannt geworden, wo eine Vielzahl von radial innerhalb von Dichtungselementen angeordneten Permanentmagneten in einem Molch vorgesehen sind, deren Magnetisierung im Wesentlichen in einer bezüglich der Achse des Rohres radialen Richtung verläuft. Diese Anordnung taucht axial versetzt zwei mal auf, wobei die Orientierung der Permanentmagnete in beiden Anordnungen unterschiedlich ist, so dass sich außerhalb des Rohres eine im Wesentlichen parallel zur Rohrachse verlaufendes Magnetfeld ergibt. Dies erschwert die genaue Positionsbestimmung des Molches; auch sind die Kosten infolge der Vielzahl von Magneten erhöht.

Die US 6 014 789 offenbart einen Molch, der zur Reinigung eines Rohres in diesem bewegt wird. Im Mittelstück des Molches befinden sich mehrere Scheiben, in die (nach der dortigen Ausführung in Fig. 6) jeweils ein stabförmiger Permanentmagnet mit einer radial zur Rohrachse verlaufenden Magnetisierung eingebaut ist. Mit einem Positionsdetektor, der einen Magnetfeldsensor aufweist, wird der Molch mit den damit verbundenem Magneten von außen lokalisiert.

Durch die vorliegende Erfindung soll eine Vorrichtung mit einem in einem Rohr bewegbaren Molch und einem Positionsdetektor gemaß dem Oberbegriff des Anspruches 1 so weitergebildet werden, daß eine stärkere Änderung des Magnetfeldes bei Annäherung des bewegten Molches an den Magnetfeldsensor erhalten wird, die weitgehend unabhängig von der Winkelstellung des Molches ist.

Diese Aufgabe ist erfindungsgemäß gelöst durch eine Vorrichtung mit den im Anspruch 1 angegeben Merkmalen.

Bei der erfindungsgemäßen Vorrichtung verläuft das von einem stabförmigen, mit dem Molch verbundenen Permanentmagneten erzeugte Feld in einer bezüglich der Rohrachse radialen Richtung. Das Magnetfeld des Permanentmagneten wird bei der Relativbewegung zwischen bewegtem Molch und Rohr somit in zur Magnetachse geneigter Richtung geschnitten, wodurch sich höhere Änderungen des Magnetfeldes ergeben. Außerdem können bei der erfindungsgemäßen Anordnung des Permanentmagneten dessen Stirnflächen näher bei der Innenwand des Rohres liegen, wodurch sich auch ein kleinerer minimaler Abstand zwischen Magnetfeldsensor und Permanentmagnet und damit eine höhere Amplitude des Ausgangssignales des Magnetfeldsensors ergibt.

Stabförmige Permanentmagnete sind in großer Auswahl und preisgünstig auf dem Markt erhältlich. Sie lassen sich auch au einfache Weise in eine Bohrung des bewegten Molches einsetzen, die zu ihrer Herstellung ebenfalls wenig Aufwand benötigt.

Durch den in Umfangsrichtung verlaufenden Polschuh ist trotzdem gewährleistet, daß das Ausgangssignal des Magnetfeldsensors weitgehend unabhängig von der Winkelstellung des bewegten Molches (und damit des Permanentmagneten) bezüglich der Rohrachse ist.

Mit der Weiterbildung der Erfindung gemäß Anspruch 2 wird erreicht, daß das durch den Permanentmagneten erzeugte Magnetfeld über einen kleinen Spalt zwischen den Enden der Polschuhe geschlossen wird. Man hat dort also verhältnismäßig hohe Feldstärken, da das Streufeld gering ist.

Diesem hohen Feld zwischen den Polschuhenden wird gemäß Anspruch 3 der Magnetfeldsensor ausgesetzt. Diese empfindliche Anordnung ermöglicht es, insgesamt mit verhältnismäßig schwachen Permanentmagneten auszukommen. Schwache Permanentmagneten sind im Hinblick darauf vorteilhaft, daß möglicherweise in anderen Rohrabschnitten, welche der bewegte Molch ebenfalls passiert, Komponenten angeordnet sind, die keinen stärkeren Magnetfeldern ausgesetzt werden sollen. Auch dann, wenn in dem Rohr Medien gefördert werden, die magnetisierbare oder magnetische Partikel enthalten, ist es vorteilhaft, wenn von dem bewegten Teil kein stärkeres Magnetfeld ausgeht.

Mit der Weiterbildung der Erfindung gemäß Anspruch 4 wird nochmals eine Erhöhung der Empfindlichkeit des Positionsdetektors erhalten, da die Magnetfeldströme zwischen beiden Spalten der Polschuhanordnung zur Messung verwendet werden.

Die Weiterbildung der Erfindung gemäß Anspruch 5 ist deshalb vorteilhaft, weil man eine Abdichtung zwischen dem bewegten Molch und der Rohrinenwand bei geringer Reibung zwischen bewegtem Molch und Rohrinnenwand erhält.

Da der Permanentmagnet gemäß Anspruch 5 im verminderten Durchmesser aufweisenden Verbindungsabschnitt des bewegten Molches angeordnet ist, beeinträchtigt sein Vorhandensein nicht die Dichteigenschaften der mit der Rohrinnenwand zusammenarbeitenden Kopfabschnitte.

Nachstehend wird die Erfindung anhand von Ausführungsbeispielen unter Bezugnahme auf die Zeichnung näher erläutert. In dieser zeigen:

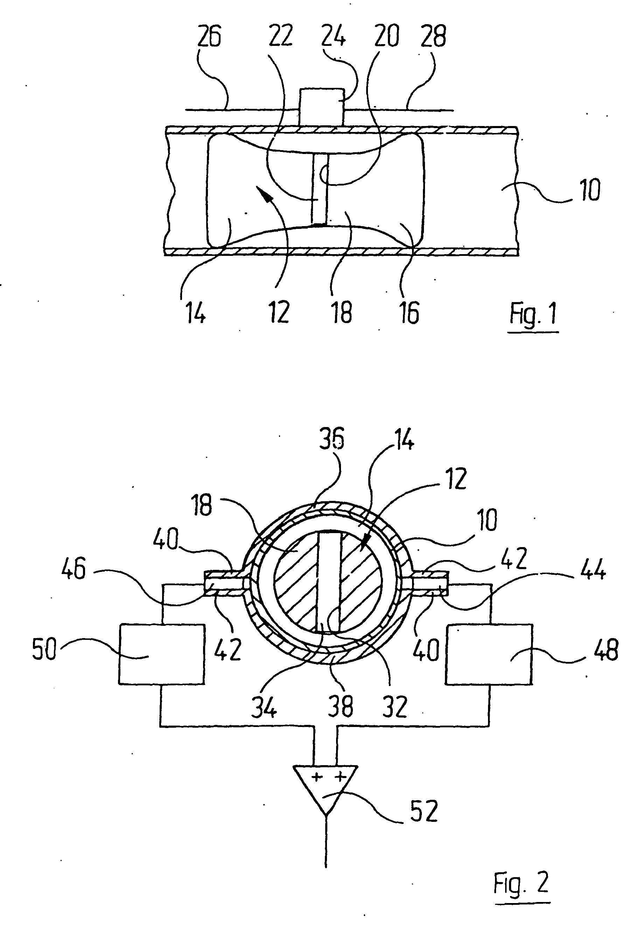

- Figur 1:: einen schematischen Schnitt durch ein Rohr mit einem darin beweglichen Molch und einem Pos- sitionsdetektor für die Molchposition;
- Figur 2:: einen transversalen Schnitt durch ein Rohr, einen in diesem beweglichen Molch und einen abgewandelten Positionsdetektor für die Molch- position.

In der Zeichnung ist bei 10 eine Rohrleitung wiedergegeben, die Teil eines Rohrleitungssystemes ist, über welche einer in der Zeichnung nicht dargestellten Spritzanlage Lack zugeführt wird, der z.B. zum Lackieren von Fahrzeugkarosserien dient.

In der Rohrleitung 10 ist ein insgesamt mit 12 bezeichneter Molch dargestellt. Dieser hat im wesentlichen knochenförmige Gestalt mit zwei Kopfabschnitten 14, 16, die dicht mit der Rohrinnenfläche zusammenarbeiten, und einem zwischen den Kopfabschnitten 14, 16 liegenden Verbindungsabschnitt 18, der verminderten Durchmesser aufweist.

Der Molch 12 ist insgesamt symmetrisch zu einer Mittelebene.

Außen auf der Rohrleitung 10 sitzt ein Magnetfeldsensor 24. Bei diesem kann es sich um einen magnetischen oder induktiven Magnetfeldsensor handeln. Der Magnetfeldsensor 24 ist über eine Betriebsleitung 26 und eine Signalleitung 28 mit einer in der Zeichnung nicht wiedergegebenen Betriebs/Auswerte-Schaltung verbunden.

In dem Verbindungsabschnitt 18 des Molches 12 ist eine transversale Bohrung 32 vorgesehen. In dieser ist ein axial magnetisierter stabförmiger Permanentmagnet 34 fest angeordnet, z.B. eingeklebt. Die Magnetisierung des Permanentmagneten 34 erstreckt sich somit in bezogen auf die Rohrachse radialer Richtung.

Auf die Außenseite der Rohrleitung 10 sind zwei jeweils im wesentlichen halbkreisförmige Polschuhe 36, 38 aufgesetzt. Diese haben eine Umfangserstreckung von jeweils weniger als 180°, hier etwa 160°, und an den Enden der Polschuhe 36, 38 sind jeweils ebene Flansche 40, 42 angeformt. Diese erstrecken sich jeweils im wesentlichen parallel zu einer Durchmesserlinie.

Die Polschuhe 36 und 38 sind aus einem Material hoher magnetischer Permeabilität hergestellt und sind an der Außenfläche der Rohrleitung 10 festgeschraubt, festgeklebt oder sonstwie befestigt.

Zwischen den Flanschen 40 und 42 der Polschuhe 36, 38 liegen flache Zwischenräume, über welche die Rückführung des Außenfeldes des Permanentmagneten 34 erfolgt, wenn dieser den Polschuhen 36, 38 gegenübersteht. Offensichtlich ist die Stärke des zwischen den Flanschen 40, 42 der Polschuhe 36, 38 herrschenden Feldes weitestgehend unabhängig von der Winkelstellung des stabförmigen Permanentmagneten 34.

In den Spalten zwischen den Flanschen 40, 42 sind zwei Hall-Sonden 44, 46 angeordnet. Diese sind jeweils über ein Kabel mit einer zugeordneten Betriebs/Auswerteschaltung 48 bzw. 50 verbunden, welche den Hall-Sonden einen eingeprägten Meßstrom zuführen und die von den Hall-Sonden zurückgelieferten Hall-Spannungen messen.

An den Ausgängen der Betriebs/Auswerteschaltungen 48, 50 werden Signale erhalten, die Richtung und Betrag des Magnetfeldes angeben.

Die Ausgangssignale der beiden Betriebs/Auswerteschaltungen 48, 50 werden durch einen Addierer 52 zusammengefaßt, dessen Ausgangssignal somit mit hoher Empfindlichkeit erkennen läßt, ob der Permanentmagnet 34 zwischen den Polschuhen 36, 38 steht oder nicht. Entsprechend genau läßt sich die Position des Molches 12 messen.

## Patentansprüche

1. Vorrichtung mit einem in einem Rohr (10) bewegbaren Molch (12) und einem Positionsdetektor für den Molch, wobei der Positionsdetektor einen an oder bei dem Rohr anordenbaren Magnetfeldsensor (24; 44, 46) und einen mit dem Molch (12) verbundenen stabförmigen Permanentmagneten (24; 44, 46) aufweist, dessen Magnetisierung im Wesentlichen in einer bezüglich der Achse des Rohres (10) radialen Richtung verläuft,
**dadurch gekennzeichnet, dass**
der Positionsdetektor mindestens einen in Umfangsrichtung verlaufenden Polschuh (36, 38) aufweist, der am Rohr (10) in der Nachbarschaft des Magnetfeldsensors anordenbar ist, derart, dass das Ausgangssignal des Magnetfeldsensors (44, 46) weitgehend unabhängig von der Winkelstellung des Molches (12) bezüglich der Achse des Rohres (10) ist.

2. Vorrichtung nach Anspruch 1, **dadurch gekennzeichnet, daß** zwei Polschuhe (36, 38) vorgesehen sind, welche sich jeweils über etwas weniger als 180° in Umfangsrichtung erstrecken und so angeordnet sind, daß die Polschuhenden in Umfangsrichtung beabstandet sind, vorzugsweise gleich beabstandet sind.

3. Vorrichtung nach Anspruch 2, **dadurch gekennzeichnet, daß** der Magnetfeldsensor (44, 46) bei oder in dem zwischen zwei Polschuhenden liegenden Polspalt angeordnet ist.

4. Vorrichtung nach Anspruch 3, **dadurch gekennzeichnet, daß** zwei Magnetfeldsensoren (44, 46) vorgesehen sind und bei jedem der beiden Polschuhspalte einer von den Magnetfeldsensoren angeordnet ist und daß die Ausgangssignale der beiden Magnetfeldsensoren (44, 46) durch einen Addierer (52) zusammengefaßt werden.

5. Vorrichtung nach einem der vorhergehenden Ansprüche, **dadurch gekennzeichnet, daß** der Molch (12) zwei dicht mit der Innenwand des Rohres (10) zusammenarbeitende Kopfabschnitte (14, 16) und einen dazwischen liegenden Verbindungsabschnitt (18) verminderten Durchmessers aufweist und daß der Permanentmagnet (22; 34) in dem Verbindungsabschnitt (18) angeordnet ist.

## Claims

1. Device comprising a moving part (12) in a pipe (10) and a position detector for the moving part wherein the position detector comprises a magnetic field sensor (24; 44, 46) arranged on or near the pipe and a rodlike permanent magnet (22; 34) connected to the moving part (12) the magnetization of said permanent magnet (22; 34) running essentially in a direction which is radial with reference to the axis of the pipe (10) ;
**characterized in that**
the position detector comprises at least one pole shoe (36, 38) which extends in circumferential direction and is adapted to be provided on the pipe (10) in the vicinity of the magnetic field sensor (44, 46) such that the output signal of the magnetic field sensor (44, 46) is largely independent from the angle position of the moving part (12) with reference to the axis of the pipe.

2. Device according to claim 1, **characterized in that** two pol shoes (36 , 38) are provided, which extend in each case over somewhat less than 180° in a circumferential direction, preferably equally spaced.

3. Device according to claim 2, **characterized in that** the magnetic field sensor (44, 46) is arranged near or in the pole gap lying between two pole shoe ends.

4. Device according to claim 3, **characterized in that** two magnetic field sensors (44, 46) are provided and one of the magnetic field sensors is arranged in each of the two pole shoe gaps and that the output signals of the two magnetic field sensors (44, 46) are combined by an adder (52).

5. Device according to one of the preceding claims, **characterized in that** the moving part (12) has two head sections (14, 16) cooperating closely with the internal wall of the pipe (10) and a connection section (18) of reduced diameter lying in between and that the permanent magnet (22; 34) is arranged in the connection section (18).

## Revendications

1. Dispositif avec un racleur (12) mobile dans un tube (10) et un capteur de position pour le racleur, lequel capteur de position présente un capteur de champ magnétique (24 ; 44, 46) pouvant être disposé sur ou près du tube et un aimant permanent (24 ; 44, 46) en forme de barre relié au racleur (12), dont la magnétisation s'étend essentiellement dans une direction radiale par rapport à l'axe du tube (10),
**caractérisé en ce que**
le capteur de position présente au moins un épanouissement polaire (36, 38) s'étendant en direction circonférentielle, qui peut être disposé sur le tube (10) au voisinage du capteur de champ magnétique de façon que le signal de sortie du capteur de champ magnétique (44, 46) soit dans une large mesure indépendant de la position angulaire du racleur (12) par rapport à l'axe du tube (10).

2. Dispositif selon la revendication 1, **caractérisé en ce que** deux épanouissements polaires (36, 38) sont prévus, lesquels s'étendent chacun sur un peu moins de 180° en direction circonférentielle et sont disposés de façon que les extrémités des épanouissements polaires soient distantes en direction circonférentielle, de préférence soient également distantes.

3. Dispositif selon la revendication 2, **caractérisé en ce que** le capteur de champ magnétique (44, 46) est disposé près de ou dans l'entrefer situé entre deux extrémités d'épanouissements polaires.

4. Dispositif selon la revendication 3, **caractérisé en ce que** deux capteurs de champ magnétique (44, 46) sont prévus et qu'un capteur de champ magnétique est disposé près de chacun des deux entrefers, et que les signaux de sortie des deux capteurs de champ magnétique (44, 46) sont réunis par un additionneur (52).

5. Dispositif selon une des revendications précédentes, **caractérisé en ce que** le racleur (12) présente deux portions de tête (14, 16) qui coopèrent de manière étanche avec la paroi intérieure du tube (10) et une portion de liaison (18) de diamètre réduit située entre les deux, et que l'aimant permanent (22 ; 34) est disposé dans la portion de liaison (18).
